# EUROPEAN PATENT APPLICATION

(11) **EP 2 937 768 A1**
(43) Date of publication of application: **28.10.2015**
(21) Application number: 12890294.7
(22) Date of filing: 20.12.2012
(51) Int. Cl.: G06F 3/048, G06F 13/00

(54) **REMOTE ACCESS CONTROL PROGRAM, METHOD FOR SAME, AND DEVICE FOR SAME**

(71) Applicant: Fujitsu Limited, Kawasaki-shi, Kanagawa 211-8588 (JP)
(72) Inventor: GUO Zhaogong, Kawasaki-shi Kanagawa 211-8588 (JP); TANAKA Hideki, Kawasaki-shi Kanagawa 211-8588 (JP); YOKOTA Koichi, Kawasaki-shi Kanagawa 211-8588 (JP); ARITAKE Hirokazu, Kawasaki-shi Kanagawa 211-8588 (JP); SUGANO Hiroyasu, Kawasaki-shi Kanagawa 211-8588 (JP)
(74) Representative: Fenlon, Christine Lesley
(86) International application number: PCT/JP2012/083094
(87) International publication number: WO 2014/097452

(57) **Abstract**

A remote access control program causes a computer to execute a process including remotely accessing a connection destination apparatus via a network to enable remote operation, acquiring data transfer rate information of the computer to the network, acquiring operation information input to the computer, determining a content type indicating a state of use of the computer on the basis of the operation information and the data transfer rate information, generating pseudo operation information when the content type is a predetermined type, and maintaining an unlock state in the computer on the basis of the generated pseudo operation information.

## Description

### TECHNICAL FIELD

The present invention relates to a remote access control program, a method for the same, and a device for the same.

### BACKGROUND ART

Recently, a technique for remotely accessing a connection destination apparatus such as a PC or a server from a connection source apparatus such as a smart phone or a PC (Personal Computer) using a protocol such as an RDP (Remote Desktop Protocol) or a VNC (Virtual Network Computing) has been widely used.

A user of the connection source apparatus operates the connection source apparatus, starts a remote control program to input authentication information of the connection destination apparatus such as a user ID and a password and perform authentication, and remotely accesses the connection destination apparatus. Consequently, screen data of the connection destination apparatus is output to an output device such as a display of the connection source apparatus. The user remotely operates the connection destination apparatus via the connection source apparatus.

Usually, if the operation by the user is not performed for the connection source apparatus for a fixed time, for malfunction prevention and security measures, the connection source apparatus switches to a lock state. If the connection source apparatus switches to the lock state, for example, display of the output device of the connection source apparatus is switched to a screen indicating the lock state. The user sometimes may be unable to input operation other than predetermined operation. If the connection source apparatus switches to the lock state, the connection source apparatus sometimes ends the operation of an application and switches to a power saving mode.

### CITATION LIST

### PATENT LITERATURE

Patent literature 1: Japanese Patent Application Laid-open No. H08-272496
Patent literature 2: Japanese Patent Application Laid-open No. 2010-237807
Patent literature 3: Japanese Patent Application Laid-open No. 2008-305257
Patent literature 4: Japanese Patent Application Laid-open No. 2011-114418

### NON-PATENT LITERATURE

Non-Patent Literature 1: http://jp.fujitsu.com/journal/strength/technologies/201106.html

### SUMMARY OF INVENTION

### PROBLEMS TO BE SOLVED BY THE INVENTION

However, if the switching control of the lock state of the connection source apparatus is performed according to only presence or absence of operation, the user sometimes may be unable to obtain expected experience depending on a state of use of the connection source apparatus by the user.

For example, while the user is remotely accessing the connection destination apparatus and reproducing a moving image on the connection destination apparatus and viewing the moving image via the connection source apparatus, the user sometimes does not operate the connection source apparatus. In this case, if the operation of the user is not performed for a lock time, the connection source apparatus switches to the lock state. The user becomes unable to view the moving image.

Therefore, it is an object of the present invention to provide a remote access control program, a method for the same, and a device for the same for performing switching control of the lock state of the connection source apparatus on the basis of a state of use of the connection destination apparatus by the user.

### MEANS FOR SOLVING THE PROBLEMS

One aspect of embodiments is a remote access control program for causing a computer to execute a process comprising, remotely accessing a connection destination apparatus via a network to enable remote operation to the connection destination apparatus, acquiring data transfer rate information of the computer to the network, acquiring operation information input to the computer, determining a content type indicating a state of use of the computer on the basis of the operation information and the data transfer rate information, generating pseudo operation information when the content type is a predetermined type, and maintaining an unlock state in the computer on the basis of the generated pseudo operation information.

### ADVANTAGEOUS EFFECTS OF THE INVENTION

According to the one aspect of the embodiments, switching control of the lock state of the connection source apparatus is performed on the basis of the state of use of the connection source apparatus by the user.

### BRIEF DESCRIPTION OF DRAWINGS

FIG. 1 is a diagram depicting a remote access system;
FIG. 2 is a flowchart of the lock control processing by the connection source remote access control program;
FIG. 3 is a diagram depicting an example of remote access by the connection source apparatus;
FIG. 4 is a flowchart of the lock control processing by the remote access control program in the first embodiment;
FIG. 5 is a diagram depicting a remote access system in the first embodiment;
FIG. 6 is a diagram depicting content types in the first embodiment;
FIG. 7 is a diagram depicting an example of the editing score and the viewing score in the first embodiment;
FIG. 8 is a diagram depicting an example of a content type determination result in the first embodiment;
FIG. 9 is a diagram depicting an example of the remote access control processing in the first embodiment;
FIG. 10 is a diagram depicting a remote access control system in the second embodiment;
FIG. 11A and 11B are diagrams depicting an example of screen data in the second embodiment;
FIG. 12 is a diagram depicting content types in the second embodiment;
FIG. 13 is a diagram depicting an example of the editing score and the viewing score in the second embodiment;
FIG. 14 is a diagram depicting an example of a content type determination result in the second embodiment;
FIG. 15 is a diagram depicting a first example of the remote access control processing in the second embodiment;
FIG. 16 is a diagram depicting a second example of the remote access control processing in the second embodiment;
FIG. 17 is a diagram depicting a remote access control system in the third embodiment; and
FIG. 18 is a flowchart of the lock control processing by the remote access control program in the third embodiment.

### DESCRIPTION OF EMBODIMENTS

An embodiment of the present invention is explained below with reference to the drawings.

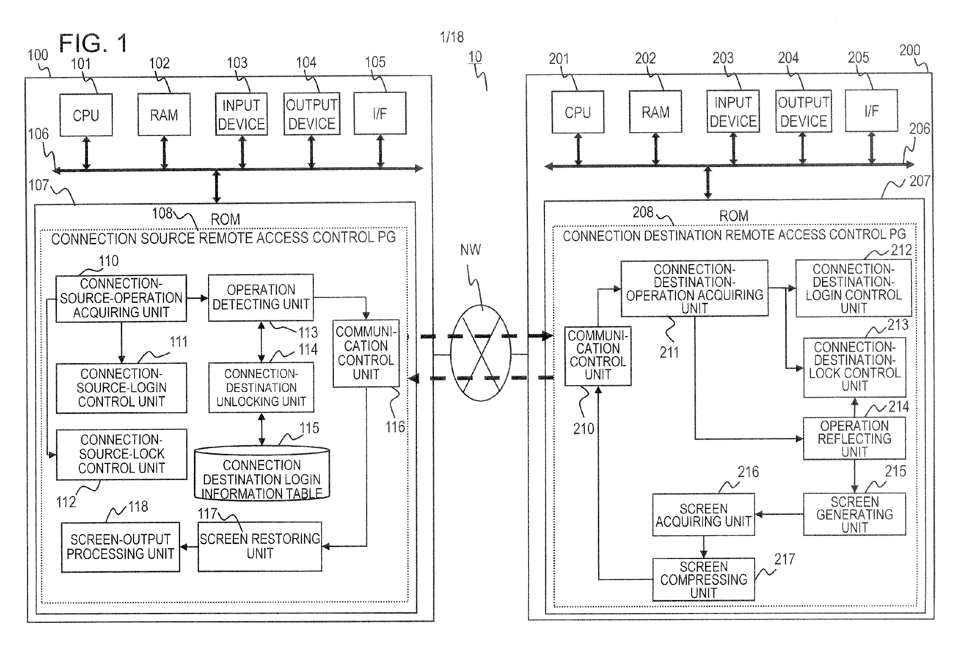

FIG. 1 is a diagram depicting a remote access system. The remote access system 10 depicted in FIG. 1 includes a connection source apparatus 100 and a connection destination apparatus 200. The connection source apparatus 100 and the connection destination apparatus 200 are connected to each other via a network NW such as the Internet or an intranet.

The connection source apparatus 100 includes a CPU 101, a RAM 102, an input device 103 such as a mouse and a keyboard, an output device 104 such as a display, an interface 105 for connection to the network NW, a bus 106, and a ROM 107.

Note that, as in a touch panel or the like of a smart phone, if a user 1 of the connection source apparatus 100 touches display on a display to operate the connection source apparatus 100, the input device 103 and the output device 104 are incorporated in the connection source apparatus 100 as one device.

On the other hand, the connection destination apparatus 200 includes a CPU 201, a RAM 202, an input device 203 such as a mouse and a keyboard, an output device 204 such as a display, an interface 205 for connection to the network NW, a bus 206, and a ROM 207.

The connection source apparatus 100 remotely accesses the connection destination apparatus 200 and output, to the output device 104, screen data to be output to the output device 204 of the connection destination apparatus 200.

Next, the configurations of the connection source apparatus 100 and the connection destination apparatus 200 are specifically explained.

First, in the connection source apparatus 100, the ROM 107 stores various programs such as a connection source remote access control program 108 for remotely accessing the connection destination apparatus 200 and data needed for program execution such as a connection destination login information table 115 including connection destination login information such as a user ID and a password needed for login to a remote access destination.

The RAM 102 stores the various programs, temporary data, and the like loaded from the ROM 107 by the CPU 101.

The CPU 101 executes the various programs stored in the ROM 107 and performs control of the devices in the connection source apparatus. For example, the CPU 101 executes the remote access control program 108 to realize remote access unit or the like including connection-source-operation acquiring unit 110, connection-source-login control unit 111, connection-source-lock control unit 112, operation detecting unit 113, connection-destination unlocking unit 114, connection-source-communication control unit 116, screen restoring unit 117, and screen-output processing unit 118.

The connection-source-operation acquiring unit 110 acquires operation information indicating content of operation performed by the user 1 of the connection source apparatus 100 via the input device 103. The operation is keyboard operation, mouse operation, touch panel operation, and the like.

The connection-source-login control unit 111 acquires, via the connection-source-operation acquiring unit 110, connection source authentication information such as a user ID and a password input by the user 1 at the start of use of the connection source apparatus 100. The connection-source-login control unit 111 determines whether the input connection source authentication information is appropriate. If determining that the input connection source authentication information is appropriate, the connection-source-login control unit 111 enables use of resources of the connection source apparatus 100 by the user 1.

The connection-source-lock control unit 112 controls the connection source apparatus 100 to a lock state or an unlock state on the basis of presence or absence of the operation information acquired by the connection-source-operation acquiring unit 110. When the user 1 logs in, the connection-source-lock control unit 112 controls the connection source apparatus 100 to the unlock state. After the login of the user, if time in which the connection-source-operation acquiring unit 110 does not acquire operation reaches a lock time, the connection-source-lock control unit 112 switches the connection source apparatus 100 from the unlock state to the lock state.

The lock state refers to, for example, a state in which the user 1 is not able to input operation other than predetermined operation or a state of a power saving mode after the operation of an application is ended. The unlock state refers to a state in which use of the resources of the connection source apparatus 100 by the user 1 is possible. To switch the connection source apparatus in the lock state to the unlock state, the user 1 needs to log in again.

The operation detecting unit 113 acquires operation information from the connection-source-operation acquiring unit 110. The operation detecting unit 113 transmits operation by the user 1 to the connection destination apparatus 200 via the communication control unit 116. If the operation by the user 1 is remote access to the connection destination apparatus, the operation detecting unit 113 requests the connection-destination unlocking unit 114 to transmit connection destination login information including a user ID and a password for logging in to the connection destination apparatus. The operation detecting unit 113 transmits the connection destination login information acquired from the connection-destination unlocking unit 114 to the connection destination apparatus 200 via the communication control unit 116.

The connection-destination unlocking unit 114 acquires, in response to a request of the operation detecting unit 113, the connection destination login information from the connection destination login information table 115 and transmits the connection destination login information to the operation detecting unit 113.

The communication control unit 116 controls data transmission and reception via the network NW.

The screen-output processing unit 118 outputs screen data acquired from the connection source remote access control program 108 to the output device 104.

The screen restoring unit 117 acquires compressed screen data from the connection destination apparatus 200 via the communication control unit 116 and restores the screen data.

In the connection destination apparatus 200, the ROM 207 stores various programs such as a connection destination remote access control program 208 for receiving a remote access from the connection source apparatus 100 and data needed for program execution.

The RAM 202 stores the various programs, temporary data, and the like loaded from the ROM 207 by the CPU 201.

The CPU 201 executes the various programs stored in the ROM 207 and performs control of the devices in the connection destination apparatus 200. For example, the CPU 201 executes the connection destination remote access control program 208 to realize communication control unit 210, connection-destination-operation acquiring unit 211, connection-destination-login control unit 212, connection-destination-lock control unit 213, operation reflecting processing unit 214, screen generating unit 215, screen acquiring unit 216, screen compressing unit 217, and the like.

The communication control unit 210 controls data transmission and reception performed via the network NW. For example, the communication control unit 210 receives operation information and connection destination login information from the connection source apparatus 100.

The connection-destination-operation acquiring unit 211 acquires operation information indicating content of operation performed by a user 2 of the connection destination apparatus 200 via the input device 203 and operation information and connection destination login information from the input device 103 received via the communication control unit 210.

The connection-destination-login control unit 212 acquires, from the connection-destination-operation acquiring unit 211, connection destination authentication information such as a user ID and a password input via the input device 203 by the user 2 at the start of use of the connection destination apparatus 200 and the connection destination login information from the connection source apparatus 100. The connection-destination-login control unit 212 determines whether the connection destination authentication information or the connection destination login information is appropriate. If determining that the connection destination authentication information is appropriate, the connection-destination-login control unit 212 enables use of the resources of the connection destination apparatus 200 by the user 2 of the connection destination apparatus 200. If determining that the connection destination login information is appropriate, the connection-destination-login control unit 212 enables use of the resources of the connection destination apparatus 200 by the user 1 of the connection source apparatus 100.

The operation-reflection processing unit 214 causes, on the basis of the operation information acquired by the connection-destination operation acquiring unit 211, the CPU 201 to execute various programs corresponding to the operation information such as a document creating program for creating a document and a moving image reproducing program. If the operation-reflection processing unit 214 causes the CPU 201 to execute the programs, the operation-reflection processing unit 214 transmits, to the connection-destination-lock control unit 213, program execution information indicating an execution state of the programs on the connection destination remote access control program 208.

The connection-destination-lock control unit 213 controls the connection destination apparatus 200 to the lock state or the unlock state on the basis of presence or absence of the operation information acquired by the connection-destination operation acquiring unit 211 and presence or absence of the program execution information from the operation-reflection processing unit 214. For example, even if the operation information acquired by the connection-destination operation acquiring unit 211 is absent, if the CPU 201 is executing the moving image reproducing program for reproducing moving image data, the connection-destination-lock control unit 213 acquires, from the operation-reflection processing unit 214, program execution information indicating that the moving image reproducing program is being executed and maintains the connection destination apparatus 200 in the unlock state.

The screen generating unit 215 generates, on the basis of the program execution information of the operation-reflection processing unit 214, screen data to be displayed on the output device 204.

The screen acquiring unit 216 acquires the screen data from the screen generating unit 215.

The screen compressing unit 217 acquires the screen data from the screen acquiring unit 216 and compresses the screen data. The screen compressing unit 217 transmits the compressed screen data to the connection source apparatus 100 via the communication control unit 210.

Note that the connection source remote access control program 108 and the connection destination remote access control program 208 may be one remote access control program having the functions of the programs rather than being separate programs.

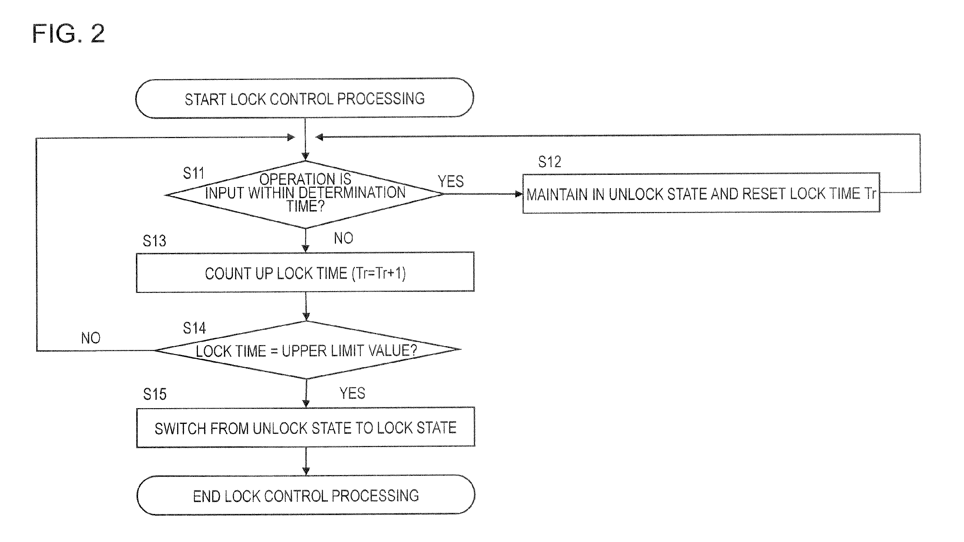

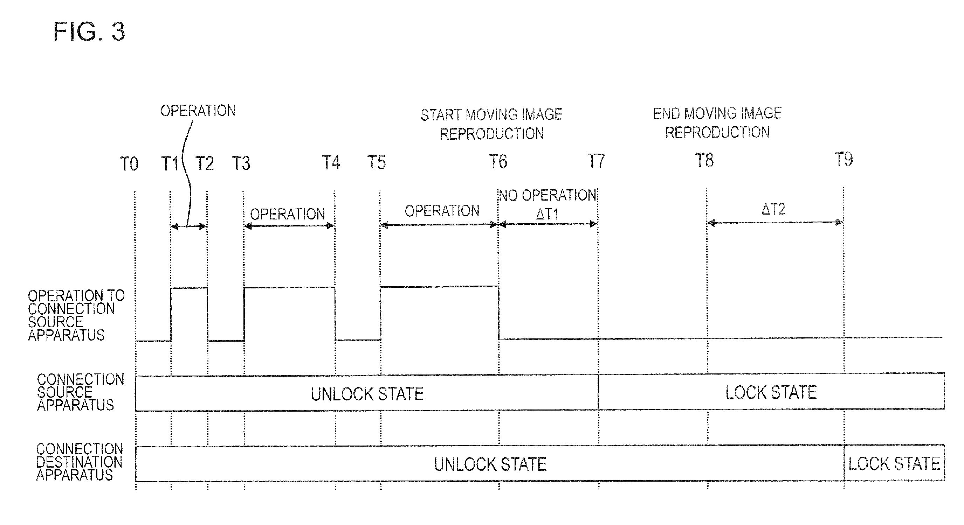

A specific example of lock control processing by the connection source remote access control program 108 of the connection source apparatus 100 depicted in FIG. 1 is explained with reference to FIG. 2 and FIG. 3.

FIG. 2 is a flowchart of the lock control processing by the connection source remote access control program.

If the connection source apparatus 100 switches to a login release state, the CPU 101 sets a lock time Tr, which is a setting value for determining whether the unlock state is switched to the lock state, to 0.

The CPU 101 determines, at every determination time (e.g., at every one second), whether an input of operation to the connection source apparatus 100 is performed (step S11 in FIG. 2).

If the input of operation to the connection source apparatus 100 is performed within the determination time (Yes in step S11 in FIG. 2), the CPU 101 maintains the connection source apparatus 100 in the unlock state and resets the lock time Tr to 0 (step S12 in FIG. 2).

On the other hand, if the input of operation to the connection source apparatus 100 is not performed within the determination time (No in step S11 in FIG. 2), the CPU 101 counts up the lock time Tr by one unit (e.g., one second) (step S13 in FIG. 2).

After step S13, the CPU 101 determines whether the lock time Tr reaches an upper limit value (e.g., 180 seconds) (step S14 in FIG. 2).

If the lock time Tr does not reach the upper limit value (No in step S14 in FIG. 2), the CPU 101 returns to the processing in step S11 and determines whether the input of operation to the connection source apparatus 100 is performed within the next determination time (step S11 in FIG. 2).

On the other hand, if the lock time Tr reaches the upper limit value (Yes in step S14 in FIG. 2), the CPU 101 switches the connection source apparatus 100 from the unlock state to the lock state (step S15 in FIG. 2).

Note that the CPU 201 of the connection destination apparatus 200 also executes the connection destination remote access control program 208 and performs lock control of the connection destination apparatus 200 in the same manner as depicted in FIG. 2. However, in step S11, the CPU 201 determines whether the input of operation to the connection destination apparatus 200 is performed within the determination time, whether the operation information is received from the connection source apparatus 100 within the determination time, or whether the CPU 201 is executing the program such as the moving image reproducing program within the determination time.

If the input of operation to the connection destination apparatus 200 is performed, if the operation information is received from the connection source apparatus 100, or if the CPU 201 is executing the program (Yes in step S11), the CPU 201 performs the processing in step S12. Otherwise, the CPU 201 performs the processing in step S13.

FIG. 3 is a diagram depicting an example of remote access by the connection source apparatus.

In FIG. 3, before time T0, the user 1 of the connection source apparatus 100 operates the connection source apparatus 100 to log in and switches the connection source apparatus 100 to the login release state. Consequently, the CPU 101 of the connection source apparatus 100 starts the lock control processing depicted in FIG. 2.

AT time T0, the user 1 remotely accesses the connection destination apparatus 200 from the connection source apparatus 100 and starts remote operation of the connection destination apparatus 200. Consequently, the connection destination apparatus 200 switches to the login release state.

At times T1 to T2, times T3 to T4, and times T5 to T6, the user 1 inputs operation such as keyboard operation to the connection source apparatus 100, to remotely operate the connection destination apparatus 200, and reproduce moving image data on the connection destination apparatus 200 from time T6. As a result, the user 1 views the moving image data of the connection destination apparatus 200 via the output device 104 of the connection source apparatus 100. The CPU 201 of the connection destination apparatus 200 executes the reproduction of the moving image data until time T8.

In such a case, at or after time T6, even if the user 1 does not input operation to the connection source apparatus 100, in the connection destination apparatus 200, since the moving image reproducing program is executed within the determination time until time T8 (Yes in step S11 in FIG. 2), the CPU 201 of the connection destination apparatus 200 resets a lock time Tr2 of the connection destination apparatus 200 and maintains the connection destination apparatus 200 in the unlock state (step S12 in FIG. 2).

At or after time T8 when the reproduction of the moving image data ends and the CPU 201 stops the execution of the moving image reproducing program, no operation is input to the connection destination apparatus 200 and the CPU 201 does not execute a program corresponding to operation (No in step S11 in FIG. 2). Therefore, the CPU 201 performs count-up of the lock time Tr2 of the connection destination apparatus 200 (step S13 in FIG. 2). At time T9 when the lock time Tr2 of the connection destination apparatus 200 reaches an upper limit value ΔT2 of the connection destination apparatus 200, the CPU 201 switches the connection destination apparatus 200 from the unlock state to the lock state.

On the other hand, in the connection source apparatus 100, the user 1 inputs no operation via the input device 103 (No in step S11 in FIG. 2). Therefore, the CPU 101 performs count-up of a lock time Tr1 of the connection source apparatus 100 (step S13 in FIG. 2). At time T7 when the lock time Tr1 of the connection source apparatus 100 reaches an upper limit value ΔT1 of the connection source apparatus 100, the CPU 101 switches the connection source apparatus 100 from the unlock state to the lock state.

As a result, although the reproduction of the moving image data is performed in the connection destination apparatus 200, the connection source apparatus 100 switches to the lock state. Therefore, the user 1 becomes unable to view the moving image data halfway via the output device 104 of the connection source apparatus 100.

That is, although the user 1 is using the connection destination apparatus 200 through the remote access via the connection source apparatus 100, the connection source apparatus 100 switches to the lock state. The user 1 becomes unable to use the connection destination apparatus 200.

Therefore, in first to fourth embodiments explained below, a remote access control program is explained which performs switching control of the lock state of the connection source apparatus 100 on the basis of a state of use of the connection source apparatus 100 by the user and with which the user 1 of the connection source apparatus 100 can obtain expected experience.

### [First Embodiment]

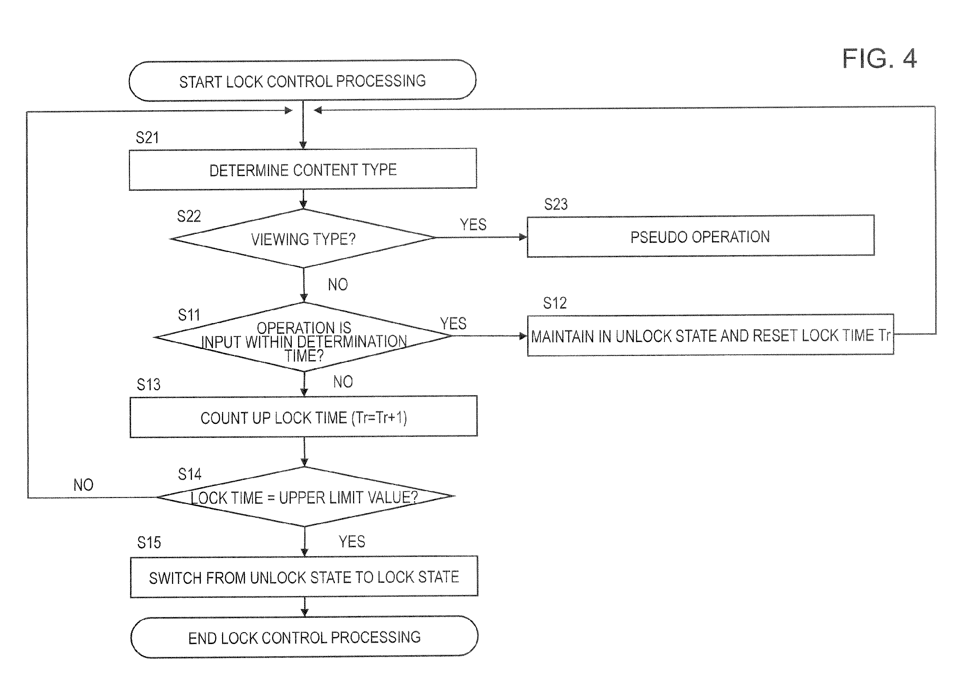

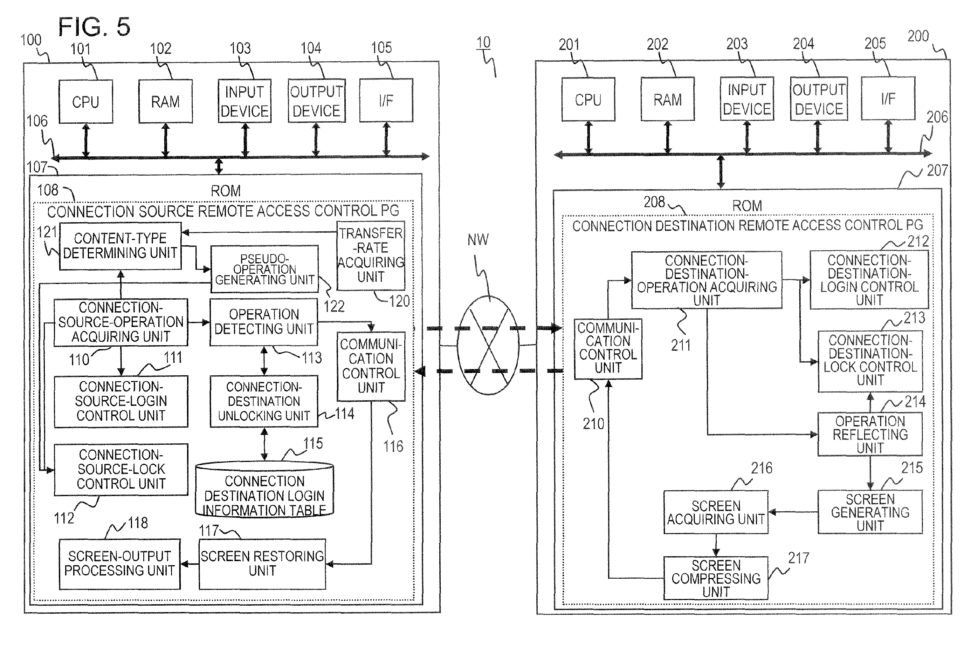

In the first embodiment, the CPU 101 of the connection source apparatus 100 executes the connection source remote access control program 108 in FIG. 5 explained below and performs lock control processing depicted in FIG. 4.

Consequently, while the user 1 is remotely accessing the connection destination apparatus 200 and reproducing and viewing moving image data, the CPU 101 simulatively generates operation information so as to maintain the unlock state, and reset the lock time Tr1. As a result, the lock time Tr1 exceeds the upper limit value ΔT1 of the lock time Tr1, the connection source apparatus 100 maintains the unlock state, and the user 1 views the moving image data.

On the other hand, if the user 1 performs no operation even when remotely accessing the connection destination apparatus 200 or the connection destination apparatus 200does not reproduce the moving image data, if the lock time Tr1 reaches the upper limit value, the CPU 101 switches the connection source apparatus 100 to the lock state.

FIG. 4 is a flowchart of the lock control processing by the remote access control program in the first embodiment. In FIG. 4, the same reference signs are attached to steps same as the steps in FIG. 2.

The CPU 101 determines a content type indicating a state of use of the connection source apparatus 100 (S21). The state of use means that, for example, the user 1 is remotely accessing the connection destination apparatus 200 and reproducing and viewing the moving image data or creating document data. According to step S21, it is determined whether the user 1 is remotely accessing the connection destination apparatus 200 and reproducing and viewing the moving image data.

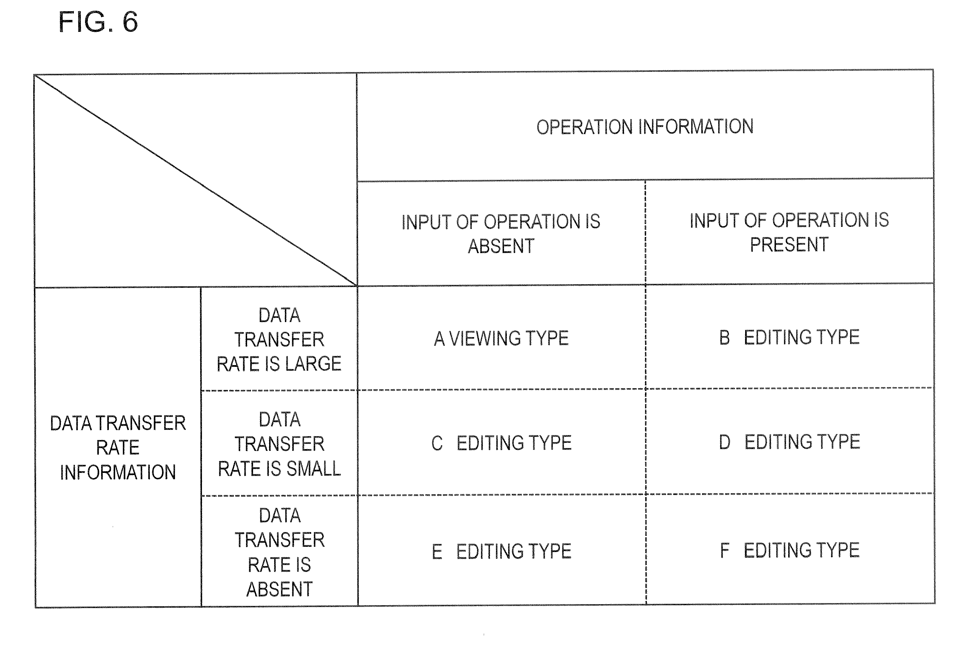

If the content type is a "viewing type" indicating that the user 1 is remotely accessing the connection destination apparatus 200 and reproducing and viewing the moving image data (Yes in step S22 in FIG. 6), the CPU 101 generates pseudo operation information, maintains the unlock state, and performs reset of the lock time Tr1 (step S23 in FIG. 6).

If the content type is not the "viewing type" (No in step S22 in FIG. 6), the CPU 101 performs the processing of S11 to S15 in the same manner as depicted in FIG. 2.

FIG. 5 is a diagram depicting a remote access system in the first embodiment. In FIG. 5, the same reference numerals are attached to sections same as the sections in FIG. 1.

The CPU 101 executes the connection source remote access control program 108 depicted in FIG. 4 to realize transfer-rate acquiring unit 120, content-type determining unit 121, and pseudo-operation generating unit 122 in addition to the connection-source-operation acquiring unit 110, the connection-source-login control unit 111, the connection-source-lock control unit 112, the operation detecting unit 113, the connection-destination unlocking unit 114, the connection-source-communication control unit 116, the screen restoring unit 117, and the screen-output processing unit 118 depicted in FIG. 1.

The transfer-rate acquiring unit 120 acquires, from the communication control unit 116, a value of a data transfer rate between the connection source apparatus 100 and the network NW. The data transfer rate means a data amount output from the connection source apparatus 100 to the network NW or input from the network NW to the connection source apparatus 100. The transfer-rate acquiring unit 120 outputs, on the basis of an average of the data transfer rate within the determination time, data transfer rate information indicating the magnitude of the data transfer rate to the content-type determining unit 121. The data transfer rate information indicates that, for example, the average of the data transfer rate is, with respect to any two rate thresholds, any one of "the data transfer rate is large" indicating that the average is larger than all rate thresholds, "the data transfer rate is small" indicating that the average is between two rate thresholds, and "the data transfer rate is absent" indicating that the average is smaller than all the rate thresholds.

The content-type determining unit 121 determines, on the basis of the presence or absence of the operation information from the connection-source operation acquiring unit 110 and the data transfer rate information from the transfer-rate acquiring unit 120, a state of use of the connection source apparatus 100 by the user at every determination time.

Usually, if moving image being reproduced is transferred from the connection destination apparatus 200 to the connection source apparatus 100 during remote access, a value of a data transfer rate of the moving image data is large compared with if the operation information is transferred from the connection source apparatus 100 to the connection destination apparatus 200. Therefore, as depicted in FIG. 6, the content-type determining unit 121 determines a content type indicating a state of use of the connection source apparatus 100.

FIG. 6 is a diagram depicting content types in the first embodiment. In the first embodiment, the CPU 101 determines any one of two content types, i.e., a "viewing type" and an "editing type" on the basis of the presence or absence of operation of the connection source apparatus 100 and the magnitude of the data transfer rate.

The "viewing type" in the first embodiment means a state of use in which, although operation is not input to the connection source apparatus 100, large data is transferred from the connection destination apparatus 200 to the connection source apparatus 100, for example, the user 1 of the connection source apparatus 100 is remotely accessing the connection destination apparatus 200 to execute the moving image reproducing program, and reproducing and viewing a moving image on the connection destination apparatus 200 (A).

The "editing type" in the first embodiment means a state of use not corresponding to the "viewing type". For example, the user 1 executes the moving image reproducing program and reproduces and views a moving image on the connection destination apparatus 200, which the user 1 remotely accesses, and inputs keyboard operation from the connection source apparatus 100 to the connection destination apparatus 200 (B), according to the operation of the CPU 101 for operation input in the last determination time, a value of the data transfer rate is detected small even if an input of operation is absent (C), the user 1 performs operation for creating a document on the connection destination apparatus 200, which the user 1 remotely accesses (D), the user 1 leaves the connection source apparatus 100 unattended (E), and, although operation is input to the connection source apparatus 100, the data transfer rate is determined as "absent" because the average of the data transfer rate within the determination time is very small (F).

Referring back to FIG. 5, on the basis of a determination result of the content type, specifically, if the content type is the "viewing type", the pseudo-operation generating unit 122 generates pseudo operation information and outputs the pseudo operation information to the connection-source-lock control unit 112. If the content type is the "editing type", the pseudo-operation generating unit 122 does not generate the pseudo operation information.

When acquiring the pseudo operation information, the connection-source-lock control unit 112 regards that operation is input to the connection source apparatus 100, resets the lock time Tr1, and maintains the connection source apparatus 100 in the unlock state.

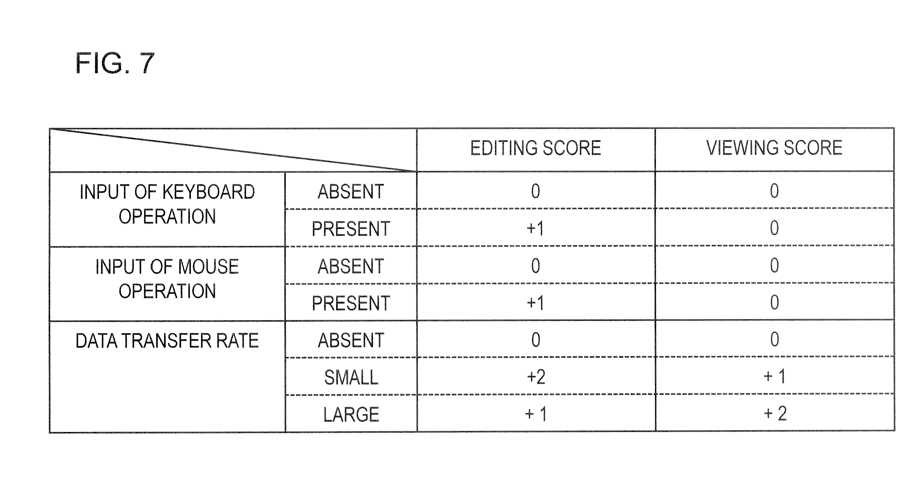

A specific example of the lock control processing by the connection source remote access control program 108 of the connection source apparatus 100 depicted in FIG. 5 is explained with reference to FIG. 7 to FIG. 9.

In FIG. 7 to FIG. 9, in determining the content type in step S21 in FIG. 4, the CPU 101 uses two evaluation items, i.e., an editing score and a viewing score. Points are added to any one or both of the editing score and the viewing score on the basis of presence or absence of an input of operation within the determination time and the magnitude of the data transfer rate. The CPU 101 adopts, as a determination result, the content type corresponding to the evaluation item having a larger point. For example, if the point of the editing scores is equal to or larger than the point of the viewing score, the CPU 101 determines that the content type is the editing type. If the point of the editing score is smaller than the point of the viewing score, the CPU 101 determines that the content type is the viewing type.

FIG. 7 is a diagram depicting an example of the editing score and the viewing score in the first embodiment.

As depicted in FIG. 7, if an input of keyboard operation or mouse operation is performed within the determination time, 1 point is added to the editing score and no point is added to the viewing score. Conversely, if the input of the keyboard operation or the mouse operation is not performed within the determination time, no point is added to the editing score and the viewing score.

If the data transfer rate within the determination time is large, it is highly likely that a moving image is viewed by remote access. Therefore, a larger point is added to the viewing score than the editing score. For example, 1 point is added to the editing score and 2 points are added to the viewing score.

If the data transfer rate within the determination time is small, it is highly likely that document creation is performed by remote access. Therefore, a large point is added to the editing score than the viewing score. For example, 2 points are added to the editing score and 1 point is added to the viewing score.

If the data transfer rate within the determination time is absent, it is highly likely that the connection source apparatus 100 is left unattended. Therefore, no point is added to both of the editing score and the viewing score.

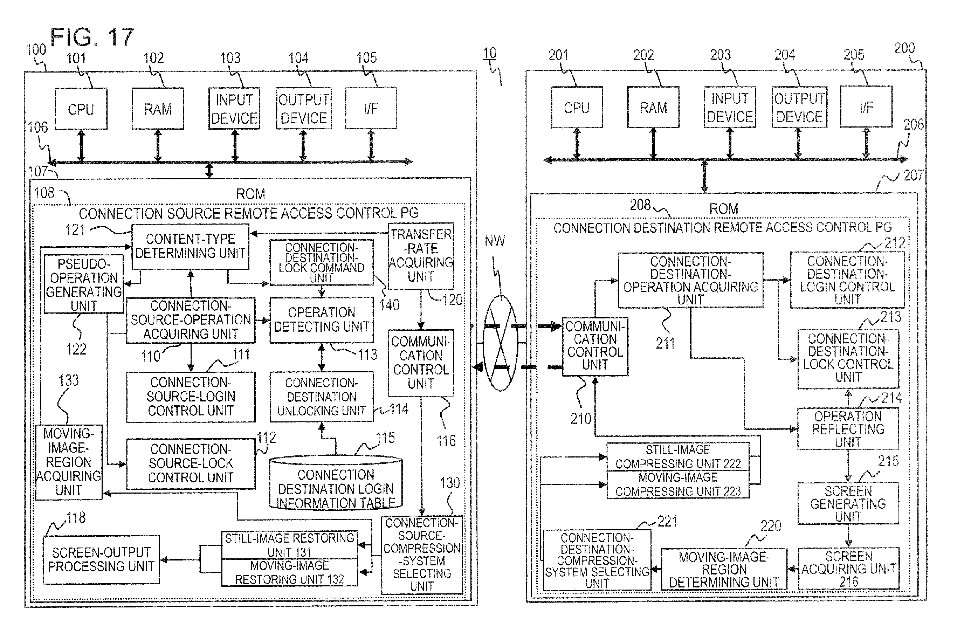

Note that values of the points to be added are not limited to the values depicted in FIG. 17 and only have to be values with which the content type is determined as depicted in FIG. 6.

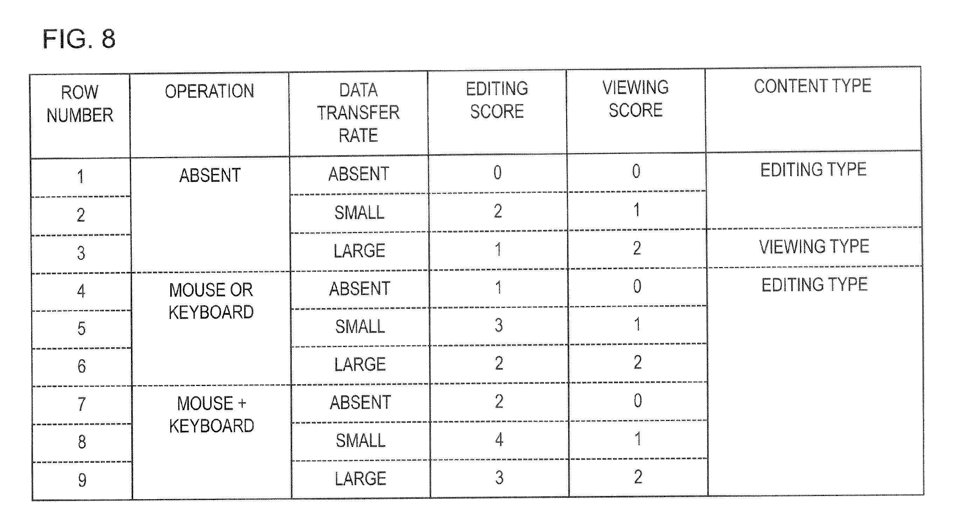

FIG. 8 is a diagram depicting an example of a content type determination result in the first embodiment. Since the values of the points depicted in FIG. 7 are added, a determination result of the content type for each presence or absence of an input of operation and magnitude of the data transfer rate is as depicted in FIG. 8.

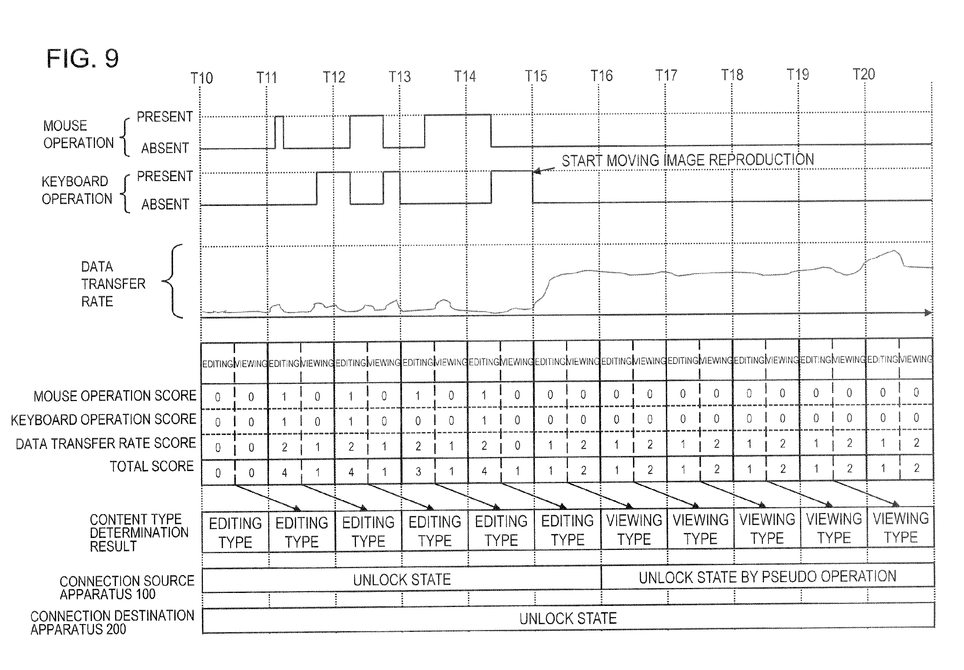

A specific example of the determination result of the content type is explained in FIG. 9 with reference to FIG. 7 and FIG. 8.

FIG. 9 is a diagram depicting an example of the remote access control processing in the first embodiment.

FIG. 9 depicts the presence or absence of the mouse operation and the keyboard operation, the data transfer rate, the editing score and the viewing score, and the determination result of the content type at times T10 to T20. Note that time intervals of times T10 to T20 are the same as the determination time.

In FIG. 9, before time T10, the user 1 of the connection source apparatus 100 operates the connection source apparatus 100 to log in and switches the connection source apparatus 100 to the unlock state. At time T10, the user 1 remotely accesses the connection destination apparatus 200 from the connection source apparatus 100 and starts remote operation of the connection destination apparatus. Consequently, the connection destination apparatus 200 switches to the unlock state.

In the connection source apparatus 100, the mouse operation is input at times T11 to T12, times T12 to T13, times T13 to T14, and times T14 to T15. The keyboard operation is input at times T11 to T12, times T12 to T13, and times T14 to T15. At time T15, the moving image reproducing program is executed on the connection destination apparatus 200 according to the immediately preceding keyboard operation. The user 1 of the connection source apparatus 100 starts viewing of moving image data.

As a result of performing such operation, the data transfer rate is absent at times T10 to T11, the data transfer rate is small at times T11 to T15, and the data transfer rate is large at or after time T15.

The CPU 101 performs, in the lock control processing (FIG. 4) performed during the next determination time, the content type determination based on the score point of the determination time.

For example, the CPU 101 totals the editing score and the viewing score at times T10 to T11 in the lock control processing at time T11. Since both of the editing score and the viewing score at times T10 to T11 are 0 point, the CPU 101 determines that the content type is the editing type (a first row in FIG. 8). Therefore, at time T11, the processing of No in step S11 and No in steps S13 and S14 in FIG. 4 is performed. The connection source apparatus 100 is maintained in the unlock state.

The CPU 101 totals the editing score and the viewing score at times T11 to T12 in the lock control processing at time T12. Since 4 points of the editing score at times T11 to T12 are larger than 1 point of the viewing score, the CPU 101 determines that the content type is the editing type (an eighth row in FIG. 8). Therefore, at time T12, the processing of Yes in step S11 and step S12 in FIG. 4 is performed. The connection source apparatus 100 is maintained in the unlock state.

Similarly, at times T12 to T15, it is determined that the content type is the editing type (the eighth row and a fifth row in FIG. 8). The processing in Yes in step S11 and step S12 in FIG. 4 is performed. The connection source apparatus 100 is maintained in the unlock state.

At time T16, the CPU 101 totals the editing score and the viewing score at times T15 to T16. 2 points of the viewing score at times T15 to T16 are larger than 1 point of the editing score. Therefore, the CPU 101 determines that the content type is the editing type (a third row in FIG. 8). Therefore, at time T16, the pseudo operation information is generated in step S23 in FIG. 4. The connection source apparatus 100 is maintained in the unlock state. At or after time T17 as well, the moving image data is viewed. Therefore, it is determined that the content type is the viewing type. As at time T16, the connection source apparatus 100 is maintained in the unlock state (the third row in FIG. 8).

In this way, in the first embodiment, the connection source apparatus 100 determines the content type at every determination time on the basis of the presence or absence of an input of operation and the magnitude of the data transfer rate, and controls the connection source apparatus 100 in any one of the unlock state or the lock state. Consequently, even if the user 1 is reproducing and viewing moving image data on the connection destination apparatus 200 at a remote access destination, the connection source apparatus 100 maintains the unlock state.

### [Second Embodiment]

In FIG. 5 in the first embodiment, if the user 1 leaves the seat while performing reproduction of a moving image and document creation on the connection destination apparatus 200 at the remote access destination via the connection source apparatus 100, although an input of operation is not performed, the moving image sometimes continues to be reproduced. In this case, the connection source apparatus 100 determines that the content type is the viewing type and maintains the unlock state. As a result, an outsider can view a document being created. Therefore, it is desirable that, even during the reproduction of the moving image, if the user 1 leaves the seat, the connection source apparatus 100 depicted in FIG. 5 determines that the content type is the editing type and, switches the unlock state to the lock state when the lock time Tr1 reaches the upper limit value ΔT1.

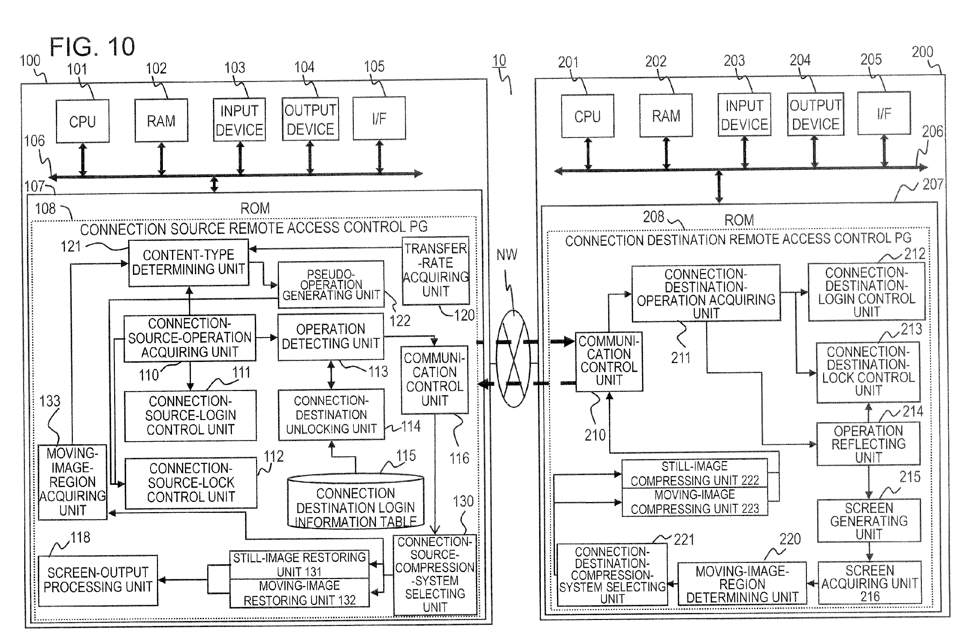

Therefore, in the second embodiment, the connection source apparatus 100 depicted in FIG. 10 explained below determines the content type on the basis of the size of a region of moving image data (hereinafter referred to as moving image region) displayed on the screen of the output device 104 in addition to the presence or absence of an input of operation and the magnitude of the data transfer rate. As a result, if the moving image region is large, in this case, it is highly likely that the user 1 is performing only reproduction of a moving image, the connection source apparatus 100 depicted in FIG. 10 determines that the content type is the viewing type. If the moving image region is small, in this case, it is highly likely that the user 1 is performing other work such as document creation together with the reproduction of the moving image, the connection source apparatus 100 depicted in FIG. 10 determines that the content type is the editing type.

FIG. 10 is a diagram depicting a remote access control system in the second embodiment. In FIG. 10, the same reference numerals are attached to sections same as the sections depicted in FIG. 5. The connection source apparatus 100 and the connection destination apparatus 200 depicted in FIG. 10 use a virtual desktop acceleration technology RVEC (http://jp.fujitsu.com/journal/strength/technologies/201106.html).

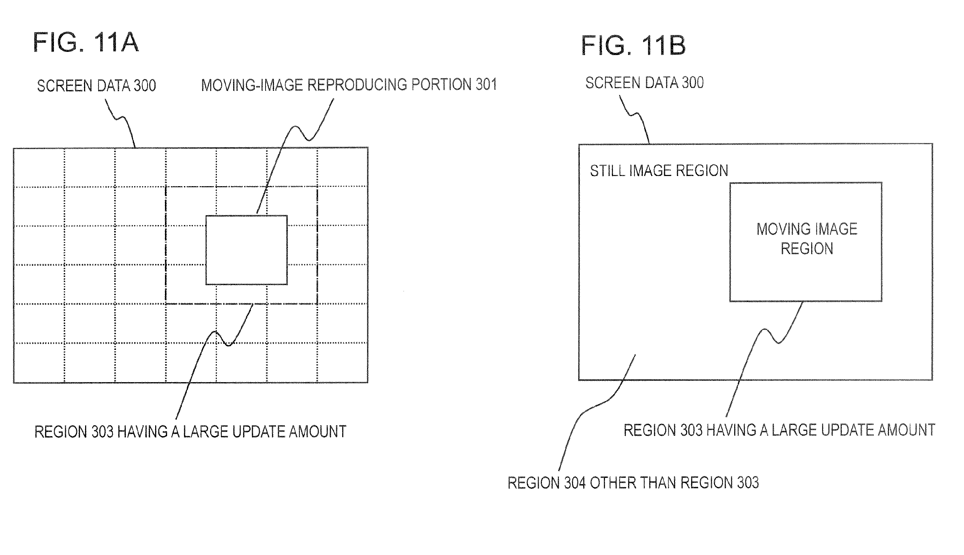

FIG. 11 is a diagram depicting an example of screen data in the second embodiment. As depicted in FIG. 11A, the connection destination apparatus 200, which uses the RVEC, divides screen data 300 including a reproducing portion 301 of moving image data into small regions and measures an update amount for each of the divided regions. The connection destination apparatus 200 extracts a region 303 having a large update amount, that is, a moving image region 303 including the reproducing portion 301 of the moving image data. As depicted in FIG. 11B, the connection destination apparatus 200 compresses the moving image region 303 according to a moving image compression system, compresses a region (a still image region) 304 other than the region 303 according to a still image compression system, and transmits the screen data 300 to the connection source apparatus 100.

Referring back to FIG. 10, the CPU 101 of the connection source apparatus 100 executes the connection source remote access control program 108 depicted in FIG. 10 and performs the lock control processing according to the flow of FIG. 4. However, the CPU 101 depicted in FIG. 10 realizes connection-source-compression-system selecting unit 130, still-image restoring unit 131, and moving-image restoring unit 132, instead of the screen restoring unit 117 depicted in FIG. 5. Further, the CPU 101 realizes moving-image-region acquiring unit 133.

On the other hand, the CPU 201 of the connection destination apparatus 200 executes a connection destination remote access control program 208 depicted in FIG. 10 to realize moving-image-region determining unit 220, connection-destination-compression-system selecting unit 221, still-image compressing unit 222, and moving-image compressing unit 223, instead of the screen compressing unit 217 depicted in FIG. 4.

If the user 1 of the connection source apparatus 100 remotely accesses the connection destination apparatus 200 and executes the moving image reproducing program on the connection destination apparatus 200, the moving-image-region determining unit 220 of the connection destination apparatus 200 extracts the moving image region 303 and the still image region 304 from the screen data 300 received from the screen acquiring unit 216.

The connection-destination-compression-system selecting unit 221 selects the moving image compression system for the moving image region 303 extracted by the moving-image-region determining unit 220 and selects the still image compression system for the still image region 304 extracted by the unit 220.

The still-image compressing unit 222 compresses the still image region 304 according to the still image compression system on the basis of a selection result of the connection-destination-compression-system selecting unit 221 and transmits the still image region 304 to the connection source apparatus 100 as screen data via the communication control unit 210.

The moving-image compressing unit 223 compresses the moving image region 303 according to the moving image compression system on the basis of the selection result of the connection-destination-compression-system selecting unit 221 and transmits the moving image region 303 to the connection source apparatus 100 as screen data via the communication control unit 210.

The connection-source-compression-system selecting unit 130 of the connection source apparatus 100 receives the compressed screen data from the connection destination apparatus 200 and determines a compression system. For example, if the screen data is the moving image region 303, the connection-source-compression-system selecting unit 130 selects a moving image restoration system. If the screen data is the still image region 304, the connection-source-compression-system selecting unit 130 selects a still image restoration system.

The connection-source-compression-system selecting unit 130 transmits the received screen data to the moving-image-region acquiring unit 133.

The still-image restoring unit 131 and the moving-image restoring unit 132 restore the screen data on the basis of a selection result of the connection-source-compression-system selecting unit 130 and transmit the screen data to the screen-output processing unit 118.

The moving-image-region acquiring unit 133 acquires moving image data from the screen data acquired from the connection-source-compression-system selecting unit 130. The moving-image-region acquiring unit 133 calculates a ratio of the region 303 having a large update amount in the screen data (=the size of the moving image region 303/(the size of the moving image region 303 + the size of the still image region 304). The moving-image-region acquiring unit 133 generates, on the basis of a calculation result, moving image region information indicating the size of the moving image region 303, that is, the size of the region of the moving image data and transmits the moving image region information to the content-type determining unit 121.

The moving image region information indicates, for example, any one of "the moving image region is large" indicating that the size of the moving image region 303 is larger than any reference region, "the moving image region is small" indicating that the size of the moving image region 303 is smaller than any reference region, and "the moving image region is absent" indicating that the size of the moving image region 303 is zero.

The content-type determining unit 121 determines a state of use of the connection source apparatus 100 of the user 1 at every determination time on the basis of the presence or absence of the operation information from the connection source input unit 110, the data transfer rate information from the transfer-rate acquiring unit 120, and the moving image region information from the moving-image-region acquiring unit 133.

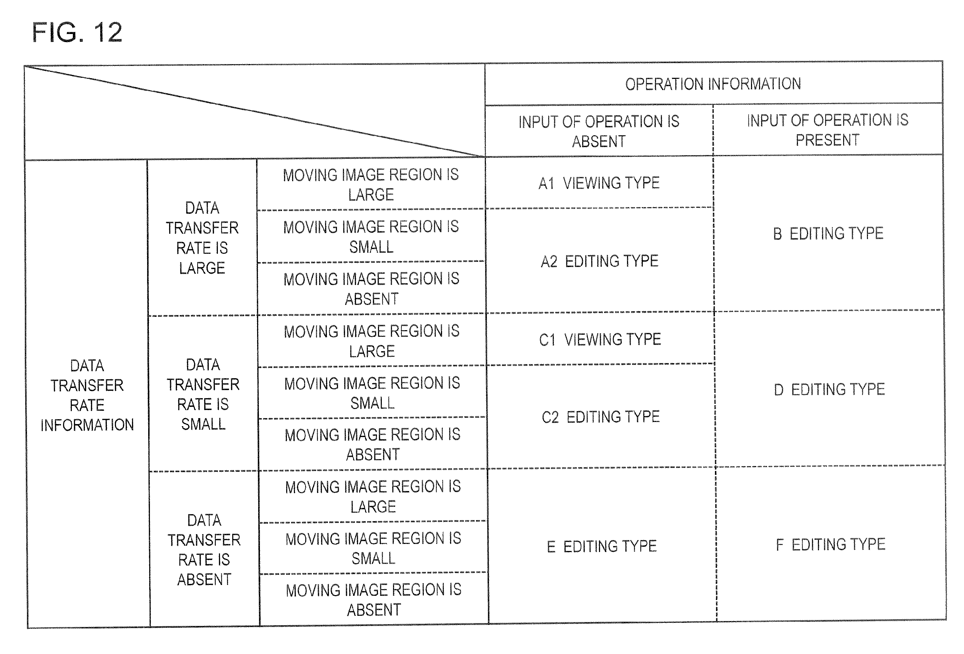

FIG. 12 is a diagram depicting content types in the second embodiment.

In FIG. 6 in the first embodiment, if the input of operation is absent and if the data transfer rate is large or small, it is highly likely that the user 1 starts to reproduce the moving image on the connection destination apparatus 200 at the remote access destination or the user is reproducing and viewing the moving image data. Therefore, the content type is the viewing type.

In this case, if the moving image region 303 is large (A1 and C1), it is highly likely that the user 1 is performing only viewing of the moving image data. However, if the moving image region 303 is small (A2 and C2), it is likely that the user 1 leaves the seat halfway in the reproduction of the moving image data and other operation such as document creation. If the moving image region 303 is absent (A2 and C2), it is likely that the user 1 is not performing reproduction of the moving image and is performing data transmission and reception to and from the network NW in the connection source apparatus 100.

Therefore, in FIG. 12, if the input of operation is absent, the data transfer rate is large, and the moving image region 303 is large (A1) and if the input of operation is absent, the data transfer rate is small, and the moving image region 303 is large (C1), it is determined that the content type is the viewing type. If the input of operation is absent, the data transfer rate is large, and the moving image region 303 is small or absent (A2) and if the input of operation is absent, the data transfer rate is small, and the moving image region 303 is small or absent (C2), it is determined that the content type is the editing type. In the other cases (B, D to F) are the same as the cases in FIG. 6. Consequently, if the user 1 leaves the seat while reducing the moving image region on the connection destination apparatus 200 at the remote access destination, and reproducing the moving image data and performing document creation via the connection source apparatus 100, the CPU 101 depicted in FIG. 10 determines that the content type is the editing type. If the lock time Tr1 reaches the upper limit value ΔT1 while the user 1 leaves the seat, the CPU 101 switches the connection source apparatus 100 to the lock state.

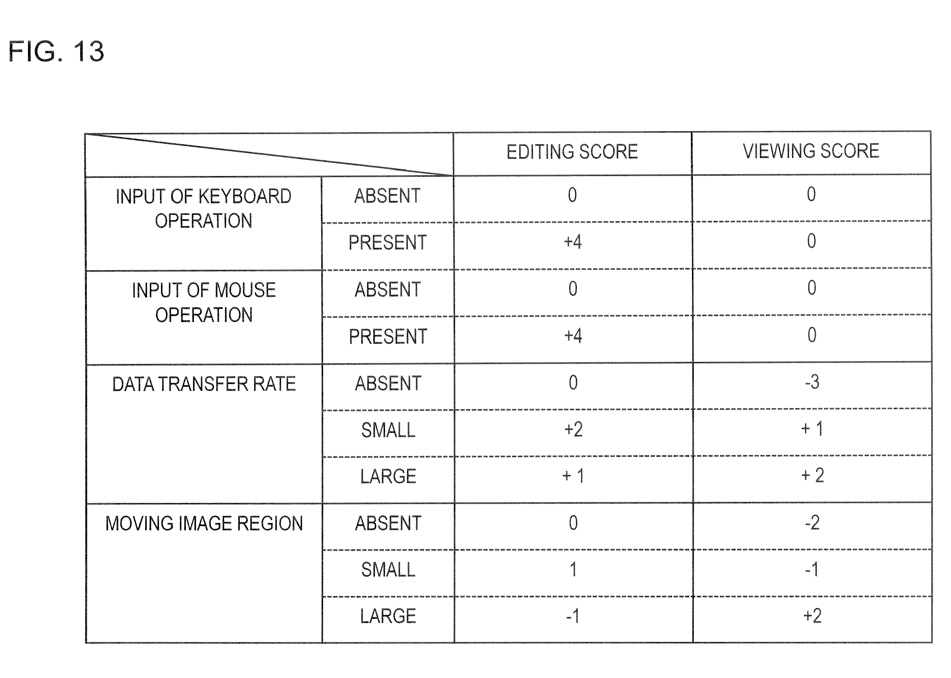

A specific example of the lock control processing by the connection source remote access control program 108 of the connection source apparatus 100 depicted in FIG. 10 is explained with reference to FIG. 13 to FIG. 16. Note that, in the second embodiment, as in the first embodiment, in determining the content type, the CPU 101 depicted in FIG. 10 uses the editing score and the viewing score.

FIG. 13 is a diagram depicting an example of the editing score and the viewing score in the second embodiment.

In FIG. 13, presence or absence of the keyboard operation and the mouse operation and a point concerning the magnitude of the data transfer rate are the same as the presence or absence and the point depicted in FIG. 7 in the first embodiment. However, 3 points are subtracted from the viewing score if the data transfer rate is absent.

If the moving image region is absent, the user 1 is not viewing the moving image data. Therefore, a point is not added to the editing score and 2 points are subtracted from the viewing score.

Further, if the moving image region is small, it is likely that, even if the user 1 is reproducing the moving image, the user 1 is performing document creation or the like without viewing the moving image data. Therefore, 1 point is added to the editing score and 1 point is subtracted from the viewing score.

If the moving image region is large, it is highly likely that the user 1 is reproducing the moving image data and concentrating on viewing. Therefore, 1 point is subtracted from the editing score and 2 points are added to the viewing score.

Note that values of the points to be added or subtracted are not limited to the values depicted in FIG. 13 and only have to be values with which the content type is determined as depicted in FIG. 12.

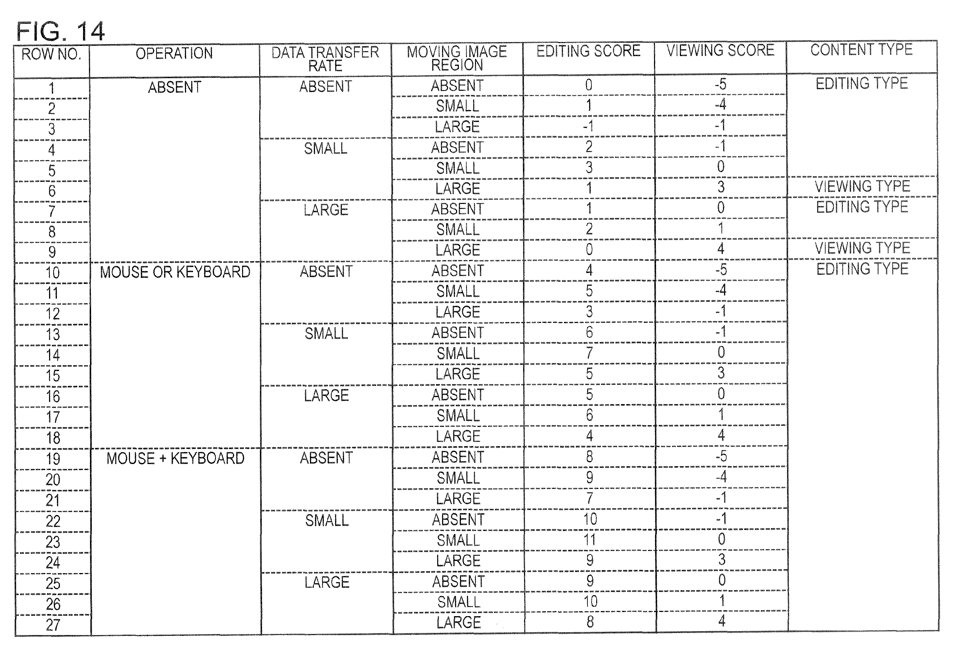

FIG. 14 is a diagram depicting an example of a content type determination result in the second embodiment. Since the values of the points depicted in FIG. 13 are added or subtracted, a determination result of the content type for each presence or absence of an input of operation, magnitude of the data transfer rate, and size of the moving image region is as depicted in FIG. 14.

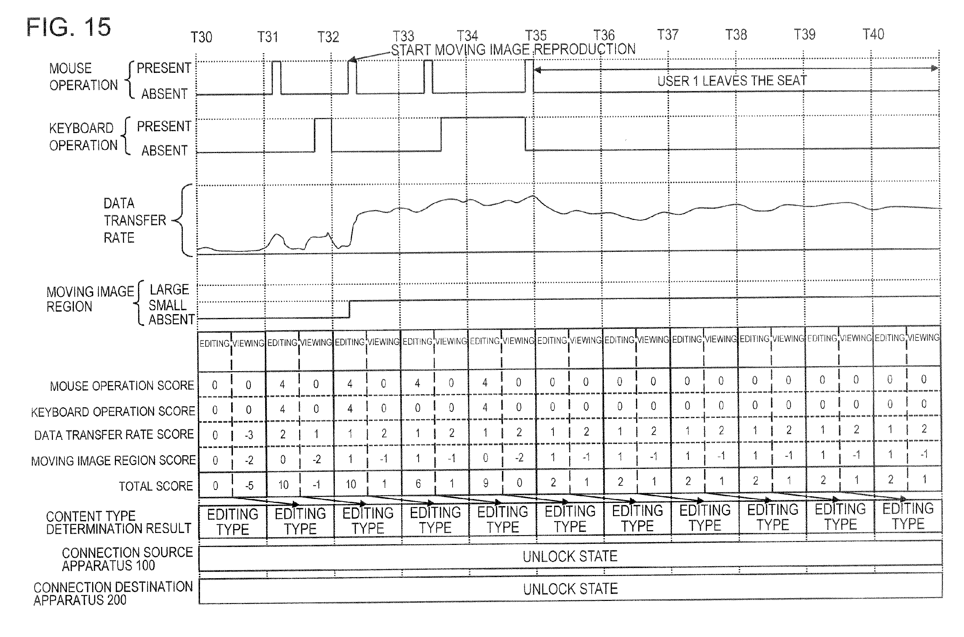

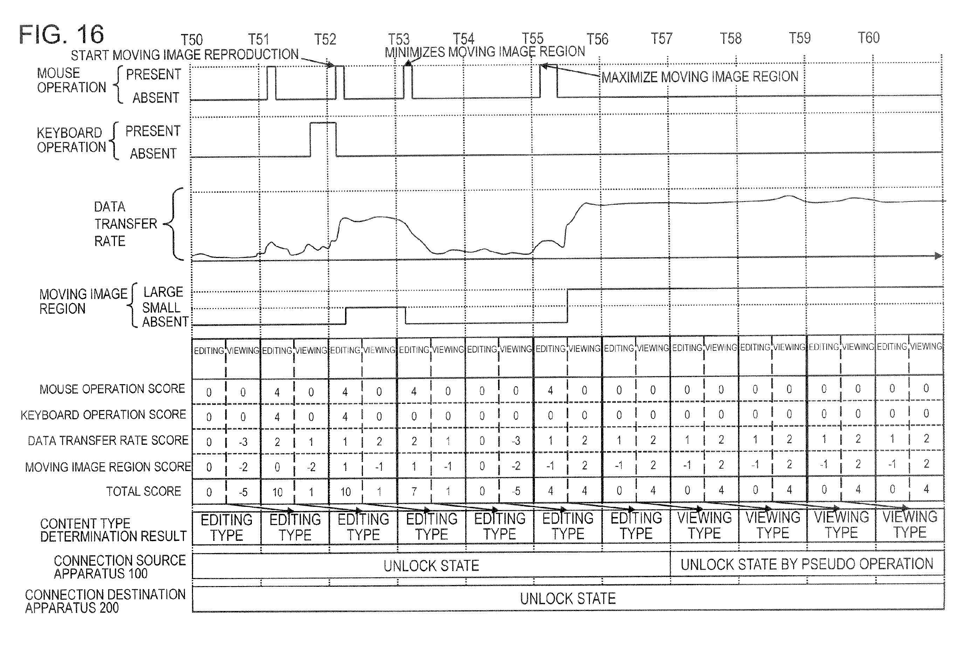

A specific example of the determination result of the content type is explained in FIG. 15 and FIG. 16 with reference to FIG. 13 and FIG. 14.

FIG. 15 is a diagram depicting a first example of the remote access control processing in the second embodiment.

FIG. 15 depicts the presence or absence of the mouse operation and the keyboard operation, the data transfer rate, the editing score and the viewing score, and the determination result of the content type at times T30 to T40. Note that time intervals of times T30 to T40 are the same as the determination time.

In FIG. 15, before time T30, the user 1 of the connection source apparatus 100 in FIG. 10 operates the connection source apparatus 100 to log in and switches the connection source apparatus 100 to the login release state. At time T30, the user 1 remotely accesses the connection destination apparatus 200 from the connection source apparatus 100 and starts remote operation of the connection destination apparatus. Consequently, the connection destination apparatus 200 switches to the login release state.

During times T31 to T35, the user 1 inputs the mouse operation and the keyboard operation to the connection source apparatus 100. Specifically, the mouse operation is input at times T31 to T32, times T32 to T33, times T33 to T34, and times T34 to T35. The keyboard operation is input at times T31 to T32, times T33 to T34, and times T34 to T35.

With the mouse operation at times T32 to T33, the user 1 reduces the moving image region and starts reproduction of the moving image data on the connection destination apparatus 200. However, in FIG. 15, even after the start of the reproduction of the moving image data at times T32 to T33, in order to perform work such as document creation in addition to viewing of the moving image data, the user 1 inputs the mouse operation and the keyboard operation. If the user 1 leaves the seat at time T35, no mouse operation and keyboard operation are input to the connection source apparatus 100 at or after time T35.

As a result of performing such operation, the data transfer rate is absent at times T30 to T31, the data transfer rate is small at times T31 to T32, and the data transfer rate is large at or after time T32. The moving image region is absent until the moving image data is reproduced at times T32 to T33. After the moving image data is reproduced, the moving image region decreases in size.
The CPU 101 performs, in the lock control processing (FIG. 4) performed during the next determination time, content type determination based on a point in the determination time.

For example, the CPU 101 totals the editing score and the viewing score at times T30 to T31 in the lock control processing at time T31. The editing score at times T30 to T31 is 0 point and the viewing score is -5 points. Therefore, the CPU 101 determines that the content type is the editing type (a first row in FIG. 14). Therefore, at time T31, the processing of No in step S11, step S13, and No in step S14 in FIG. 4 is performed. The connection source apparatus 100 is maintained in the unlock state.

The CPU 101 totals the editing score and the viewing score at times T31 to T32 in the lock control processing at time T32. Since 10 points of the editing score at times T31 to T32 are larger than -1 point of the viewing score, the CPU 101 determines that the content type is the editing type (a twenty-second row in FIG. 14). Therefore, at time T32, the processing of Yes in step S11 and step S12 in FIG. 4 is performed. The connection source apparatus 100 is maintained in the unlock state.

In the lock control processing at time T33 after the reproduction of the moving image data is started, the CPU 101 totals the editing score and the viewing score at times T32 to T33. Since 10 points of the editing score at times T32 to T33 are larger than 1 point of the viewing score, the CPU 101 determines that the content type is the editing type (a twenty-sixth row in FIG. 14). Therefore, at time T33, the processing of Yes in step S11 and step S12 in FIG. 4 is performed. The connection source apparatus 100 is maintained in the unlock state.

In the lock control processing at times T34 and T35, as at time T33, it is determined that the content type is the editing type (a seventeenth row and a twenty-fifth row in FIG. 14).

In the lock control processing at time T36, the CPU 101 totals the editing score and the viewing score at times T35 to T36 after the user 1 leaves the seat. Since 2 points of the editing score at times T35 to T36 are larger than 1 point of the viewing score, the CPU 101 determines that the content type is the editing type (an eighth row in FIG. 14). Therefore, at time T36, the processing of No in step S11, step S13, and No in step S14 in FIG. 4 is performed. The connection source apparatus 100 is maintained in the unlock state.

In the lock control processing at times T36 to T40, as at time T33, it is determined that the content type is the editing type (the eighth row in FIG. 14).

At or after time T40, if the lock time Tr1 reaches the upper limit value ΔT1 while the user 1 remains leaving the seat, the CPU 101 switches the connection source apparatus 100 to the lock state.

In this way, in FIG. 15, if the moving image region is reduced and the moving image data is reproduced on the connection destination apparatus 200 at the remote access destination, the data transfer rate is large or small and the input of operation is absent, so it is determined that the content type is the editing type.

Consequently, even if the user 1 leaves the seat while reducing the moving image region, reproducing the moving image data, and performing reproduction document creation on the connection destination apparatus 200 at the remote access destination via the connection source apparatus 100, the CPU 101 switches the connection source apparatus 100 to the lock state if the lock time Tr1 reaches the upper limit value ΔT1. Therefore, an outsider is not able to view a document being created while the user 1 leaves the seat.

FIG. 16 is a diagram depicting a second example of the remote access control processing in the second embodiment.

FIG. 16 is a modification of FIG. 15. In FIG. 16, according to the mouse operation to the connection source apparatus 100 at times T52 to T53, the user 1 reduces the moving image region and starts reproduction of the moving image data on the connection destination apparatus 200 at the remote access destination. Thereafter, the user 1 minimizes the moving image region according to the mouse operation to the connection source apparatus 100 at times T53 to T54. The user 1 maximizes the moving image region according to the mouse operation to the connection source apparatus 100 at times T55 to T56. At times T51 to T52 and T52 to T53, the user 1 inputs the keyboard operation to the connection source apparatus 100.

As a result of performing such operation, the data transfer rate is absent at times T50 to T51, the data transfer rate is small at times T51 to T52, and the data transfer rate is large at times T52 to T53. The data transfer rate is small at times T53 to T54 when the mouse operation for minimizing the moving image region is input. The data transfer rate is absent at times T54 to T55 when the moving image region is minimized. At or after times T55 to T56 when the mouse operation for maximizing the moving image region is input, the data transfer rate is large.

As a result, it is determined that the content type corresponding to the editing score and the viewing score up to time T50 to time T55 when the moving image region is absent or small is the editing type (the first row, the twenty-second row, the twenty-sixth row, and a fourteenth row in FIG. 14). It is determined that the content type corresponding to the editing score and the viewing score up to times T55 to T56 when the mouse operation for maximizing the moving image region is input is also the editing type (an eighteenth row in FIG. 14). However, it is determined that the content type corresponding to the editing score and the viewing score at or after times T56 to T57 when no operation is input while the moving image region is kept maximized is the viewing type (a ninth row in FIG. 14). That is, as in the first embodiment, the CPU 101 depicted in FIG. 10 generates pseudo operation information and maintains the connection source apparatus 100 in the unlock state.

As explained above, in the second embodiment, the CPU 101 depicted in FIG. 10 determines the content type on the basis of the presence or absence of an input of operation, the magnitude of the data transfer rate, and the size of the moving image region.

Consequently, when the user 1 of the connection source apparatus 100 depicted in FIG. 10 leaves the seat, even if the moving image data is being reproduced on the connection destination apparatus 200 at the remote access destination, it is determined that the content type is the editing type. If the lock time Tr1 reaches the upper limit value ΔT1, the connection source apparatus 100 switches to the lock state.

Further, in the second embodiment, there is an advantage that the CPU 101 depicted in FIG. 10 can reduce the influence of a disturbance of data transmission and reception between the connection source apparatus 100 and the network NW and determine the content type.

For example, if the connection source apparatus 100 is performing data transmission and reception with apparatuses other than the connection destination apparatus 200 via the network NW, or the connection destination apparatus 200 is performing data transmission and reception with apparatuses other than the connection source apparatus 100 via the network NW, the CPU 101 of the connection source apparatus 100 receives a disturbance due to the data transmission and reception. The data transfer rate to be acquired sometimes increase.

Therefore, in FIG. 6 in the first embodiment, if the input of operation is absent and the moving image data is not reproduced, although the content type is originally determined as the editing type (C), the content type is sometimes determined as the viewing type (A) due to the increase of the data transfer rate. That is, although the moving image data is not reproduced on the connection destination apparatus 200, the CPU 101 of the connection source apparatus 100 sometimes determines that the moving image data is viewed on the connection destination apparatus 200.

However, in the second embodiment, as depicted in FIG. 12, even if the input of operation is absent and the data transfer rate is large, if the moving image region is absent, the CPU 101 depicted in FIG. 10 determines that the content type is the editing type (A2) and perform the lock control processing depicted in FIG. 4 more correctly than the first embodiment.

### [Third Embodiment]

In FIG. 5 in the first embodiment and FIG. 10 in the second embodiment, if the lock time Tr1 of the connection source apparatus 100 reaches the upper limit value ΔT1, the connection source apparatus 100 switches from the unlock state to the lock state. However, even if the connection source apparatus 100 switches to the lock state, if the lock time Tr2 of the connection destination apparatus 200 does not reach the upper limit value ΔT2, the connection destination apparatus 200 maintains the unlock state.

In this way, if switching timing from the unlock state to the lock state shifts between the connection source apparatus 100 and the connection destination apparatus 200, the connection destination apparatus 200 in the unlock state uselessly consumes electric power without being used by the user 1 when the connection source apparatus 100 is in the lock state.

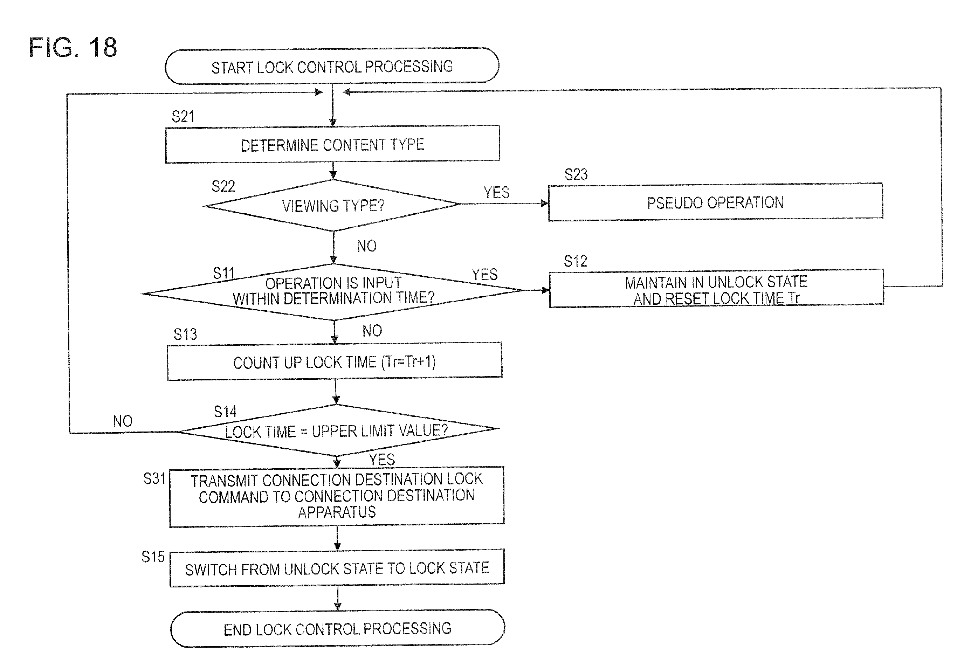

Therefore, in the third embodiment, the connection source apparatus 100 depicted in FIG. 17 explained below performs lock control processing depicted in FIG. 18 to solve inconsistency of the switching timing from the unlock state to the lock state between the connection source apparatus 100 and the connection destination apparatus 200.

FIG. 17 is a diagram depicting a remote access control system in the third embodiment. In FIG. 17, the same reference numerals are attached to sections same as the sections depicted in FIG. 10.

The CPU 101 of the connection source apparatus 100 depicted in FIG. 17 executes the connection source remote access control program 108 depicted in FIG. 17, further realizes connection-destination-lock command unit 140 in addition to the unit 110 to 116, 118, 120 to 122, and 130 to 133 depicted in FIG. 10, and performs the lock control processing depicted in FIG. 18.

In the connection source apparatus 100, the connection-destination-lock command unit 140 acquires a content type and operation information from the content-type determining unit 121. If time in which the content type is the "editing type" and the operation information is "an input of operation is absent" continuously reaches the upper limit value ΔT1 of the lock time Tr1 of the connection source apparatus 100, the connection-destination-lock command unit 140 transmits a connection destination lock command to the operation detecting unit 113. That is, if the lock time Tr1 reaches the upper limit value ΔT1, the connection-destination-lock command unit 140 transmits the connection destination clock command to the operation detecting unit 113.

The operation detecting unit 113 transmits the connection destination lock command to the connection destination apparatus 200 via the communication control unit 116.

In the connection destination apparatus 200, the connection-destination-lock control unit 213 receives the connection destination lock command from the connection source apparatus 100 via the communication control unit 210 and the connection-destination-operation acquiring unit 211. When receiving the connection destination lock command, the connection-destination-lock control unit 213 switches the connection destination apparatus 200 from the unlock state to the lock state.

FIG. 18 is a flowchart of the lock control processing by the remote access control program in the third embodiment. In FIG. 18, the same reference signs are attached to steps same as the steps in FIG. 4.

As depicted in FIG. 18, if the lock time Tr1 of the connection source apparatus 100 reaches the upper limit value ΔT1 (Yes in step S14 in FIG. 18), the CPU 101 transmits the connection destination lock command to the connection destination apparatus 200 (step S31 in FIG. 18).

After step S31, the CPU 101 switches the connection source apparatus 100 from the unlock state to the lock state (step S32 in FIG. 18). On the other hand, the connection destination apparatus 200, which receives the connection destination lock command, switches from the unlock state to the lock state.

Consequently, the inconsistency of the switching timing from the unlock state to the lock state between the connection source apparatus 100 and the connection destination apparatus 200 is solved.

### REFERENCE SIGNS LIST

10: Remote access system
100: Connection source apparatus
101: CPU
102: RAM
103: Input device
104: Output device
105: Interface
106: Bus
107: ROM
108: Connection source remote access control program
110: Connection-source-operation acquiring unit
111: Connection-source-login control unit
112: Connection-source-lock control unit
113: Operation detecting unit
114: Connection-destination-unlock control unit
115: Connection destination login information table
116: Communication control unit
117: Screen restoring unit
118: Screen output operation unit
120: Transfer-rate acquiring unit
121: Content-type determining unit
122: Pseudo-operation generating unit
130: Connection-source-compression-system selecting unit
131: Still-image restoring unit
132: Moving-image restoring unit
133: Moving-image-region acquiring unit
140: Connection-destination-lock command unit
200: Connection destination apparatus
201: CPU
202: RAM
203: Input device
204: Output device
205: Interface
206: Bus
207: ROM
208: Connection destination remote access control program
210: Communication control unit
211: Connection-destination-operation acquiring unit
212: Connection-destination-login control unit
213: Connection-destination-lock control unit
214: Operation-reflection processing unit
215: Screen generating unit
216: Screen acquiring unit
217: Screen compressing unit
220: Moving-image-region determining unit
221: Connection-destination-compression-system selecting unit
222: Still-image compressing unit
223: Moving-image compressing unit
300: Screen data
301: Moving-image reproducing portion
303: Moving image region
304: Still image region
NW: Network
Tr, Tr1, Tr2: Lock times
ΔT1, ΔT2: Upper limit values of the lock times

## Claims

1. A remote access control program (108) for causing a computer to execute a process comprising:
remotely accessing a connection destination apparatus (200) via a network (NW) to enable remote operation to the connection destination apparatus;
the remote access control program being **characterized in that** the process further comprises:
acquiring data transfer rate information (120) of the computer (100) to the network;
acquiring operation information (110) input to the computer;
determining a content type (121) indicating a state of use of the computer on the basis of the operation information and the data transfer rate information;
generating pseudo operation information (122) when the content type is a predetermined type; and
maintaining an unlock state in the computer (112) on the basis of the generated pseudo operation information.

2. The remote access control program according to claim 1, the process further comprising:
acquiring moving image region information (133) indicating a size of a region of a moving image with respect to a screen in the connection destination apparatus, wherein
the content type determining (121) determines the content type on the basis of the moving image region information in addition to the operation information and the data transfer rate information.

3. The remote access control program according to claim 1, the process further comprising:
transmitting, when switching from the unlock state to a lock state, a lock command (140) for switching the connection destination apparatus to the lock state, to the connection destination apparatus.

4. The remote access control program according to claim 1, wherein
the data transfer rate information indicates magnitude of a data transfer rate of the computer,
the operation information indicates presence or absence of an input of operation to the computer, and
the content type determining determines the content type as the predetermined type when the data transfer rate is greater than a rate threshold and the input of operation to the computer is absent.

5. The remote access control program according to claim 2, wherein
the data transfer rate information indicates magnitude of a data transfer rate of the computer,
the operation information indicates presence or absence of an input of operation to the computer, and
the content type determining determines the content type as the predetermined type when the data transfer rate is greater than a rate threshold, the input of operation to the computer is absent, and the size of the region of the moving image is greater than a reference region.

6. A remote access control method for a connection source apparatus (100) comprising:
remotely accessing the connection destination apparatus (200) via a network (NW) to enable remote operation to the connection destination apparatus;
the remote access control method being **characterized in that** the method further comprises:
acquiring data transfer rate information ((120) of the connection source apparatus;
acquiring operation information (110) input to the connection source apparatus;
determining a content type (121) indicating a state of use of the connection source apparatus on the basis of the operation information and the data transfer rate information;
generating pseudo operation information (122) when the content type is a predetermined type; and
maintaining an unlock state in the connection source apparatus on the basis of the generated pseudo operation information.

7. The remote access control method according to claim 4, further comprising:
acquiring moving image region information indicating a size of a region of a moving image with respect to a screen in the connection destination apparatus, wherein
the content type determining determines the content type on the basis of the moving image region information in addition to the operation information and the data transfer rate information.

8. The remote access control method according to claim 4, further comprising:
transmitting, when switching from the unlock state to a lock state, a lock command for switching the connection destination apparatus to the lock state, to the connection destination apparatus.

9. A remote access control apparatus comprising:
a remote access unit configured to remotely access via a network the connection destination apparatus (200) to enable remote operation to the connection destination apparatus;
the remote access control apparatus being **characterized in that** the remote access control apparatus further comprises:
a transfer-rate acquiring unit (120) configured to acquire data transfer rate information of the remote access control apparatus to the network;
an operation acquiring unit (110) configured to acquire operation information input to the remote access control apparatus;
a content-type determining unit (121) configured to determine a content type indicating a state of use of the remote access control apparatus on the basis of the operation information and the data transfer rate information;
a pseudo-operation generating unit (122) configured to generate pseudo operation information when the content type is a predetermined type; and
a connection-source-lock control unit (112) configured to maintain an unlock state in the remote access control apparatus on the basis of the generated pseudo operation information.

10. The remote access control apparatus according to claim 7, further comprising:
a moving-image-region acquiring unit (133) configured to acquire moving image region information indicating a size of a region of a moving image with respect to a screen in the connection destination apparatus, wherein
the content-type determining unit determines the content type on the basis of the moving image region information in addition to the operation information and the data transfer rate information.

11. The remote access control apparatus according to claim 7, further comprising:
a connection-destination-lock command unit (140) configured to transmit, when switching from the unlock state to a lock state, a lock command for switching the connection destination apparatus to the lock state, to the connection destination apparatus.
